# EUROPEAN PATENT APPLICATION

(11) **EP 4 570 828 A1**
(43) Date of publication of application: **18.06.2025**
(21) Application number: 23865237.4
(22) Date of filing: 25.08.2023
(51) Int. Cl.: C08F 2/48, B41M 7/00, C08F 2/44, C08K 5/5313, C08L 101/00, C09D 4/00, C09D 5/20, C09D 11/101

(54) **AQUEOUS COMPOSITION AND PRINTED MATTER**

(30) Priority: 13.09.2022 JP 2022145615
(71) Applicant: BROTHER KOGYO KABUSHIKI KAISHA, Nagoya-shi, Aichi 467-8561 (JP)
(72) Inventor: KAWAKAMI Takefumi, Nagoya-shi, Aichi 467-8562 (JP)
(74) Representative: Prüfer & Partner mbB Patentanwälte · Rechtsanwälte
(86) International application number: PCT/JP2023/030685
(87) International publication number: WO 2024/057880

(57) **Abstract**

Provided are an aqueous composition and printed matter that achieve both adhesion to a base material and film removability during recycling and pose little risk to humans or the environment. The aqueous composition contains at least a photopolymerization initiator, a polymerizable compound, a resin component, and water. The photopolymerization initiator has a solubility in the water of 1 wt% or more and has an absorption wavelength peak within the range from 350 nm to 400 nm. The polymerizable compound has a solubility in the water of 1 wt% or more and has a plurality of polymerization-reactive functional groups. The aqueous composition is in the form of an emulsion in which the resin component is dispersed in the water.

## Description

### TECHNICAL FIELD

The present invention relates to an aqueous composition and a printed matter with which a coating layer is peelable from a substrate, and to a layer formation method for forming an aqueous composition layer on a substrate.

### BACKGROUND

In recent years, recycling has been attracting attention due to growing environmental awareness. In the field of printing, there is a growing need to remove an ink from a package or the like of a product that has been subjected to printing after use of the product, and to recycle a substrate constituting the package. For example, a package using plastics or a plastic product such as a plastic bottle causes an environmental pollution issue in the oceans. For example, since the plastics are difficult to decompose in nature, some of them are classified, collected, and recycled. However, when a plastic product that has been subjected to printing or the like is mixed in during the recycling process, the recycled product may be discolored and may not be able to be reused. Such a plastic product that has been subjected to printing or the like is often discarded rather than reused. In the case where the discarded plastic product ends up in the oceans, the plastic product breaks down in seawater and becomes microplastics. When marine organisms such as fish ingest the microplastics, the microplastics are concentrated in the bodies of the marine organisms. At this time, there is concern that when humans ingest such marine organisms as food, it could have an adverse influence on human health. Such an issue is not limited to plastics, and may also be an issue with other substrates that have been subjected to printing.

From the viewpoint of recycling the substrates that have been subjected to printing or the like, methods for removing a printed matter from the substrates have been studied in the related art. For example, a recording medium forming method in Patent Literature 1 includes a step of forming, on a surface of a transparent recording medium, a removable film including an adhesive layer containing an ultraviolet-curable component and a substrate layer, and a step of forming an image on a surface of the substrate layer of the removable film. In the above recording medium forming method, in the case of reusing the transparent recording medium, an operator irradiates the removable film with ultraviolet light to cure the removable film, thereby decreasing an adhesion force of the removable film to the transparent recording medium, and removing the removable film from the transparent recording medium.

### Citation List

### Patent Literature

Patent Literature 1: JP2000-98648A

### SUMMARY

### Technical Problem

In the above recording medium forming method, a removable adhesive layer is used to attach a printing layer to the transparent recording medium via the substrate. However, a composition constituting the removable adhesive layer is composed of an oil-based component, and when the oil-based component volatilizes during formation of the adhesive layer, there is a risk of exposing an operator to the oil-based component and of adversely influencing the environment. On the other hand, the above recording medium forming method does not allow both fixation of a composition other than the oil-based component to a substrate and removal of the film during recycling. Therefore, it has not been possible to prevent risks to people and the environment while achieving both fixability to the substrate and film removability during recycling.

An object of the present invention is to provide an aqueous composition and a printed matter that have small risks to people and the environment while achieving both fixability to a substrate and film removability during recycling.

### Solution to Problem

(1) An aqueous composition according to the present invention is an aqueous composition containing at least a photopolymerization initiator, a polymerizable compound, a resin component, and water. The photopolymerization initiator has a solubility of 1 wt% or more in the water and has an absorption wavelength peak in a range of 350 nm or more and 400 nm or less. The polymerizable compound has a solubility of 1 wt% or more in the water and has a plurality of polymerizable reactive functional groups. The aqueous composition is in an emulsion state where the resin component is dispersed in the water.
   According to the present invention, since the resin component in the aqueous composition is fixed to the substrate, a film containing the photopolymerization initiator and the polymerizable compound is formed on the substrate. Since the aqueous composition is in an emulsion state where the resin component is dispersed in water, the resin component is likely to be uniformly fixed to the substrate. Since the aqueous composition is in a state where the photopolymerization initiator and the polymerizable compound are dissolved in water at 1 wt% or more, the risks to people and the environment are small. In addition, since the photopolymerization initiator has an absorption wavelength peak in the range of 350 nm or more and 400 nm or less, through irradiation with ultraviolet light having a wavelength as close as possible to that of visible light, the polymerizable compound can undergo a polymerization reaction. Since the polymerizable compound has a plurality of polymerizable reactive functional groups, the polymerization reaction can be easily caused even with ultraviolet light having a wavelength as close as possible to that of visible light. As a result, the film is cured and an adhesion force thereof to the substrate decreases, making it possible to peel off the film from the substrate. Therefore, an operator can peel off the film from the substrate and reuse the substrate. As described above, it is possible to provide an aqueous composition that has small risks to people and the environment while achieving both fixability to the substrate and film removability during recycling.
(2) The photopolymerization initiator may be an acylphosphine oxide-based photopolymerization initiator.
   The photopolymerization initiator can more reliably cause the polymerization reaction of the polymerizable compound.
(3) An aqueous composition according to the present invention is for use in forming a coating layer or a printing layer on a non-permeable substrate for recycling the non-permeable substrate by peeling off the coating layer and/or the printing layer from a laminate including the non-permeable substrate and the coating layer and/or the printing layer in this order. The aqueous composition contains at least a photopolymerization initiator, a polymerizable compound, a resin component, and water. The photopolymerization initiator has a solubility of 1 wt% or more in the water. The polymerizable compound has a solubility of 1 wt% or more in the water and has a plurality of polymerizable reactive functional groups. The aqueous composition is in an emulsion state where the resin component is dispersed in the water.
   According to the present invention, since the resin component in the aqueous composition is fixed to the non-permeable substrate, the coating layer or the printing layer containing the photopolymerization initiator and the polymerizable compound is formed on the non-permeable substrate. Since the aqueous composition is in an emulsion state where the resin component is dispersed in water, the resin component is likely to be uniformly fixed to the non-permeable substrate. Since the aqueous composition is in a state where the photopolymerization initiator and the polymerizable compound are dissolved in water at 1 wt% or more, the risks to people and the environment are small. The aqueous composition is for use in forming the coating layer or the printing layer on the non-permeable substrate for recycling the non-permeable substrate. Since the polymerizable compound has a plurality of polymerizable reactive functional groups, the polymerization reaction can be easily caused. As a result, the coating layer or the printing layer is cured and an adhesion force of the coating layer or the printing layer to the non-permeable substrate decreases, making it possible to peel off the coating layer or the printing layer from the non-permeable substrate. Therefore, the operator can peel off the coating layer or the printing layer from the non-permeable substrate and reuse the non-permeable substrate. As described above, it is possible to provide an aqueous composition that has small risks to people and the environment while achieving both fixability to the non-permeable substrate and film removability during recycling.
(4) The polymerizable compound may be contained in the aqueous composition in a range of 1 wt% or more and 40 wt% or less.
   Since the polymerizable compound having a plurality of polymerizable reactive functional groups is contained in the aqueous composition in an amount of 1 wt% or more, the polymerization reaction of the polymerizable compound is accelerated. Therefore, the film removability from the substrate is improved. Since the polymerizable compound is contained in the aqueous composition in an amount of 40 wt% or less, stability of the polymerizable compound in the aqueous composition is increased, and solubility of the polymerizable compound can be maintained.
(5) The polymerizable compound may be contained in the aqueous composition in a range of 2.5 wt% or more and 40 wt% or less.
   Since the polymerizable compound is contained in the aqueous composition in an amount of 2.5 wt% or more, the polymerization reaction of the polymerizable compound is further accelerated. Therefore, the film removability from the substrate is improved. Since the polymerizable compound is contained in the aqueous composition in an amount of 40 wt% or less, the stability of the polymerizable compound in the aqueous composition is increased, and the solubility of the polymerizable compound can be maintained.
(6) The photopolymerization initiator and the polymerizable compound may be used to enable the resin component fixed to the substrate by drying to be peeled off through irradiation with ultraviolet light.
   The operator can improve the adhesion force of the resin component to the substrate by drying, and at the same time, can peel off the resin component from the substrate through irradiation with ultraviolet light and reuse the substrate.
(7) The substrate may be a non-permeable substrate.
   Since the aqueous composition fixed to the substrate can be prevented from permeating the substrate, in the subsequent recycling process, the aqueous composition can be easily removed by irradiating a printed matter formed by fixing the aqueous composition to the substrate with ultraviolet light.
(8) The aqueous composition may contain a coloring material.
   A color can be added to the substrate.
(9) A printed matter according to the present invention contains: a non-permeable substrate; a coating layer in which the resin component in the above aqueous composition is fixed to the non-permeable substrate; and a printing layer on which a print image is to be formed and which is formed on a surface of the coating layer opposite to the non-permeable substrate.
   According to the present invention, since the resin component in the aqueous composition is fixed to the non-permeable substrate, the coating layer containing the photopolymerization initiator and the polymerizable compound is formed on the non-permeable substrate. Since the printed matter is formed by using an aqueous composition in an emulsion state where the resin component is dispersed in water, the resin component is likely to be uniformly fixed to the non-permeable substrate. Since the printed matter is formed by using an aqueous composition in a state where the photopolymerization initiator and the polymerizable compound are dissolved in water at 1 wt% or more, the risks to people and the environment are small. In addition, since the photopolymerization initiator contained in the coating layer has an absorption wavelength peak in the range of 350 nm or more and 400 nm or less, through irradiation with ultraviolet light having a wavelength as close as possible to that of visible light, the polymerizable compound can undergo a polymerization reaction. Since the polymerizable compound has a plurality of polymerizable reactive functional groups, the polymerization reaction can be easily caused even with ultraviolet light having a wavelength as close as possible to that of visible light. As a result, the coating layer is cured and an adhesion force of the coating layer to the non-permeable substrate decreases, making it possible to peel off the coating layer from the non-permeable substrate. Therefore, the operator can remove the printing layer from the non-permeable substrate by peeling off the coating layer from the non-permeable substrate, and therefore, the non-permeable substrate can be reused. As described above, it is possible to provide a printed matter that has small risks to people and the environment while achieving both fixability to the non-permeable substrate and film removability during recycling.
(10) A printed matter according to the present invention contains: a non-permeable substrate; and a printing layer on which a print image is to be formed and in which the resin component in the above aqueous composition is fixed to the non-permeable substrate.
   According to the present invention, since the resin component in the aqueous composition is fixed to the non-permeable substrate, the printing layer containing the photopolymerization initiator and the polymerizable compound is formed on the non-permeable substrate. Since the printed matter is formed by using an aqueous composition in a state where the photopolymerization initiator and the polymerizable compound are dissolved in water at 1 wt% or more, the risks to people and the environment are small. Since the printed matter is formed by using an aqueous composition in an emulsion state where the resin component is dispersed in water, the resin component is likely to be uniformly fixed to the non-permeable substrate. In addition, since the photopolymerization initiator has an absorption wavelength peak in the range of 350 nm or more and 400 nm or less, through irradiation with ultraviolet light having a wavelength as close as possible to that of visible light, the polymerizable compound can undergo a polymerization reaction. Since the polymerizable compound has a plurality of polymerizable reactive functional groups, the polymerization reaction can be easily caused even with ultraviolet light having a wavelength as close as possible to that of visible light. As a result, the printing layer is cured and an adhesion force of the printing layer to the non-permeable substrate decreases, making it possible to peel off the printing layer from the non-permeable substrate. Therefore, the operator can remove the printing layer from the non-permeable substrate by peeling off the printing layer from the non-permeable substrate, and therefore, the non-permeable substrate can be reused. As described above, it is possible to provide a printed matter that has small risks to people and the environment while achieving both fixability to the non-permeable substrate and film removability during recycling.
(11) In a layer formation method according to the present invention, a peelable layer is formed on a substrate using the above aqueous composition.
   According to the present invention, since the resin component in the aqueous composition is fixed to the substrate, a layer containing the photopolymerization initiator and the polymerizable compound is formed on the substrate. Since the aqueous composition is in an emulsion state where the resin component is dispersed in water, the resin component is likely to be uniformly fixed to the substrate. Since the aqueous composition is in a state where the photopolymerization initiator and the polymerizable compound are dissolved in water at 1 wt% or more, the risks to people and the environment are small. Since the polymerizable compound has a plurality of polymerizable reactive functional groups, the polymerization reaction can be easily caused. When the photopolymerization initiator is irradiated with ultraviolet light, the layer made of the aqueous composition is cured and the adhesion force of the layer to the substrate decreases, making it possible to peel off the layer from the substrate. Therefore, the operator can peel off the layer from the substrate and reuse the substrate. As described above, it is possible to form, on a substrate, an aqueous composition layer that has small risks to people and the environment while achieving both fixability to the substrate and film removability during recycling.

### ADVANTAGEOUS EFFECTS OF INVENTION

According to the present invention, it is possible to provide an aqueous composition and a printed matter that have small risks to people and the environment while achieving both fixability to the substrate and film removability during recycling.

### BRIEF DESCRIPTION OF THE DRAWINGS

[FIG. 1] FIG. 1 is a simplified configuration diagram of an image recording apparatus 10 in which an aqueous composition according to one embodiment of the present invention is to be used.
[FIG. 2] FIG. 2 is a schematic diagram of a coating layer 7 formed by using the aqueous composition according to one embodiment of the present invention.
[FIG. 3] FIG. 3 is a diagram illustrating a state where adhesion between the coating layer 7 and a sheet 6 decreases when a printed matter 9 is irradiated with ultraviolet light by using a substrate regeneration method according to one embodiment of the present invention.
[FIG. 4] FIG. 4 is a schematic diagram of the coating layer 12 and a coloring material layer 11 formed by using a printing method according to a modification of the present invention.

### DETAILED DESCRIPTION

Hereinafter, a preferred embodiment of the present invention will be described. Note that, the present embodiment is merely one embodiment of the present invention, and it is needless to say that the embodiment can be modified without changing the gist of the present invention.

### Internal Configuration of Image Recording Apparatus 10

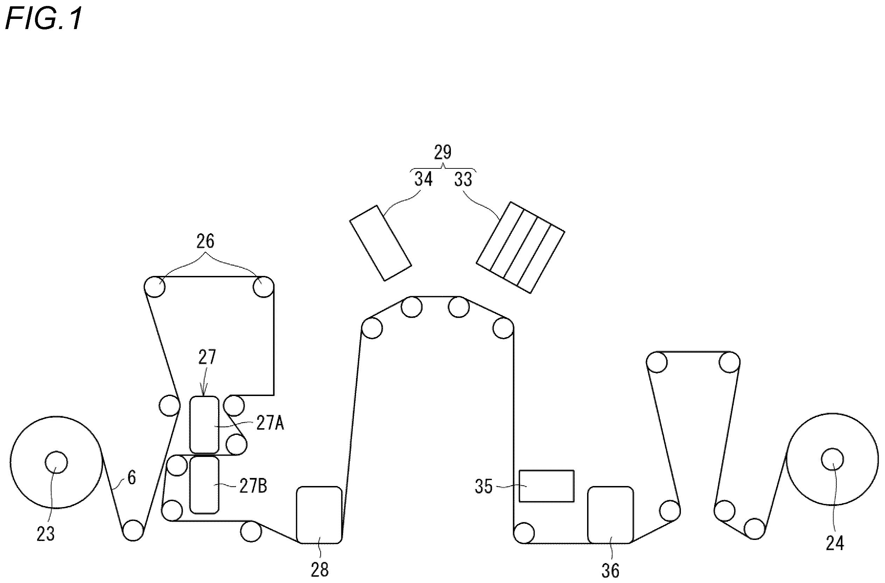

As shown in FIG. 1, an image recording apparatus 10 to be used in a printing method and a printed matter production method according to the present invention includes, in a housing (not shown), a supply roll 23, a plurality of conveying shafts 26, a web cleaner 27, a tension controller 28, a recording unit 29, a heater 35, a tension controller 36, and a rewinder 24. The image recording apparatus 10 records an image on a sheet 6.

The sheet 6 is an example of a substrate. The sheet 6 is a sheet cut to a predetermined dimension. The sheet 6 is a transparent non-permeable substrate. The non-permeable substrate is a substrate that has a surface having low water permeability. Specifically, the non-permeable substrate refers to a substrate having a water absorption amount of 10 mL/m² or less from the start of contact to 30 msec^{1/2} in a Bristow method. In addition, the "non-permeable or low-permeable" may refer to a water absorption rate of less than 0.5% in 24 hours measured in accordance with ASTM D570. More specifically, the "non-permeable" may refer to a water absorption rate of less than 0.2%, and the "low-permeable" may refer to a water absorption rate of 0.2% or more and less than 0.5%. Note that, the unit "%" of the water absorption rate is based on mass. Examples of the transparent non-permeable substrate include plastics (for example, a polypropylene, a polyethylene, a polyethylene terephthalate, a polyvinyl chloride resin, and a polycarbonate). The transparent non-permeable substrate is suitably in the form of a film or a plate. Note that, the non-permeable substrate may not be transparent.

The sheet 6 may be a permeable substrate. In this case, the sheet 6 may be one drawn from a roll in which the sheet is wound in a cylindrical shape, or may be of a fanfold type. Examples of the permeable substrate include plain paper and coated paper. The "coated paper" refers to, for example, one obtained by applying a coating agent to plain paper made of pulp, such as high-grade printing paper or medium-grade printing paper to improve smoothness, whiteness, glossiness, and the like. Specific examples thereof include high-quality coated paper and medium-quality coated paper.

The supply roll 23 is located at a lower portion of the housing. The sheet 6 is wound around the supply roll 23. A feed roller (not shown) is disposed to be able to come into contact with the sheet 6 placed on the supply roll 23. The supply roll 23 is rotated by a motor (not shown). The supply roll 23 feeds the sheet 6 onto the plurality of conveying shafts 26.

The plurality of conveying shafts 26 are rotated by a motor (not shown). The plurality of rotating conveying shafts 26 convey the sheet 6 fed out from the supply roll 23.

The web cleaner 27 is located upstream of the recording unit 29 in a conveying direction of the sheet 6. The web cleaner 27 includes a rubber roller 27A and an adhesive roller 27B. The web cleaner 27 captures dust adhering to the sheet 6 with the rubber roller 27A and transfers the dust to the adhesive roller 27B, thereby cleaning the sheet 6.

The tension controller 28 is located upstream of the recording unit 29 in the conveying direction of the sheet 6. The tension controller 28 adjusts a tension applied to the sheet 6.

The recording unit 29 includes a printing head 34 and a printing head 33. The printing head 34 is located downstream of the tension controller 28 in the conveying direction of the sheet 6. The printing head 34 may be a so-called serial head, or a so-called line head. The printing head 34 has a flow path therein through which an aqueous composition to be described later flows. The flow path is in communication with a tank through a tube. That is, the aqueous composition stored in the tank is supplied to the printing head 34 through the tube. The printing head 33 is located downstream of the printing head 34 in the conveying direction of the sheet 6. The printing head 33 includes inkjet heads for four colors: cyan, magenta, yellow, and black.

The heater 35 is located downstream of the printing head 33 in the conveying direction of the sheet 6. The heater 35 is a so-called halogen heater. The heater 35 includes a halogen lamp, which is a heating element that emits infrared light, a reflective plate, and a housing. Through openings in a housing heat from the halogen lamp and the reflective plate is radiated to the outside or is blocked.

The heater 35 heats at least one of the sheet 6 passing near the heater 35 and the aqueous composition adhering to the sheet 6. In the present embodiment, the heater 35 heats both the sheet 6 and the aqueous composition. When the aqueous composition is heated, a resin component in the aqueous composition, to be described later, softens and forms a film on the sheet 6. Then, the sheet 6 and the resin component passing near the heater 35 are cooled, and thereby the resin component is solidified. Accordingly, the resin component is fixed to the sheet 6. Note that, the heater 35 is not limited to a halogen heater, as long as it is capable of heating the sheet 6 or the aqueous composition. For example, the heater 35 may be a carbon heater, a dryer, an oven, a belt conveyor oven, or the like.

The tension controller 36 is located downstream of the heater 35 in the conveying direction of the sheet 6. The tension controller 36 adjusts a tension applied to the sheet 6.

The rewinder 24 is located at the most downstream side of the conveying path. The rewinder 24 winds up the sheet 6 conveyed by the plurality of conveying shafts 26.

### Composition of Aqueous Composition

Hereinafter, details of the aqueous composition will be described. The aqueous composition contains an ultraviolet curing agent, a resin component, a coloring material, an organic solvent, a surfactant, and water. The aqueous composition is an aqueous ink in which an ultraviolet curing agent, a resin component, a coloring material, and an organic solvent are dissolved in water. The ultraviolet curing agent contains a photopolymerization initiator and a polymerizable compound.

The photopolymerization initiator is a water-soluble compound that causes a polymerization reaction of a polymerizable compound when irradiated with ultraviolet light. The photopolymerization initiator has a solubility of 1 wt% or more in water. The solubility is determined based on the number of grams of the photopolymerization initiator dissolved in 100 g of water at 25°C. The photopolymerization initiator has an absorption wavelength peak in a range of 350 nm or more and 400 nm or less. The absorption wavelength peak can be measured, for example, using an ultraviolet-visible-near infrared spectrophotometer UV3600 manufactured by Shimadzu Corporation. The absorption wavelength peak can be measured using, for example, a measurement cell having a cell length of 10 mm.

As the photopolymerization initiator, for example, an acylphosphine oxide-based photopolymerization initiator is used. Examples of the acylphosphine oxide-based photopolymerization initiator include lithium phenyl-2,4,6-trimethylbenzoylphosphinate (absorption wavelength peak: 380 nm). Other examples of the photopolymerization initiator include 1-[4-(2-hydroxyethoxy)-phenyl]-2-hydroxy-2-methyl-1-propan-1-one, 2-hydroxy-2-methyl-1-phenyl-propan-1-one, a hydroxyalkylphenone-based initiator, an acetophenone-based initiator, a benzophenone-based initiator, a benzoin-based initiator, a benzoin ether-based initiator, an aminoalkylphenone-based initiator, a xanthone-based initiator, and an oxime-based initiator. Examples of the hydroxyalkylphenone-based initiator include 1-hydroxycyclohexyl phenyl ketone and 1-(4-isopropylphenyl)-2-hydroxy-2-methylpropan-1-one. Examples of the acetophenone-based initiator include acetophenone, 2,2-diethoxyacetophenone, and p-dimethylaminoacetophenone. Examples of the benzophenone-based initiator include benzophenone, 2-chlorobenzophenone, p,p'-dichlorobenzophenone, p,p'-bisdiethylaminobenzophenone, and Michler's ketone. Examples of the benzoin-based initiator and the benzoin ether-based initiator include benzoin, benzoin methyl ether, benzoin ethyl ether, benzoin isopropyl ether, benzoin n-propyl ether, benzoin isobutyl ether, and benzoin n-butyl ether. A solid content of the photopolymerization initiator in a total amount of ink is, for example, preferably in a range of 0.1 wt% or more and 10.0 wt% or less, more preferably in a range of 0.5 wt% or more and 5.0 wt% or less, and particularly preferably in a range of 0.8 wt% or more and 2.5 wt% or less.

The polymerizable compound is a water-soluble compound that undergoes a polymerization reaction due to a photopolymerization initiator when irradiated with ultraviolet light. The polymerizable compound has a solubility of 1 wt% or more in water. The polymerizable compound has a plurality of polymerizable reactive functional groups. The polymerizable reactive functional group refers to a functional group capable of polymerization. Examples of the polymerizable reactive functional group include an acryloyl group, a methacryloyl group, a vinyl group, an allyl group, and a vinyl ether group. Examples of the polymerizable compound include N,N'-1,2-ethanediylbis{N-[2-(acryloylamino)ethyl]acrylamide}, N,N'-(((2-acrylamido-2((3-(buta-1,3-diene-2-ylamino)propoxy-1,3-diyl)bis(oxy))bis(propane-3,1-diyl))diacrylamide, N,N-bis(2-acrylamidoethyl)acrylamide, and N,N'-{oxybis(2,1-ethanediyloxy-3,1-propanediyl)}bisacrylamide. A solid content of the polymerizable compound in the total amount of ink is, for example, preferably in a range of 1.0 wt% or more and 40.0 wt% or less, more preferably in a range of 2.5 wt% or more and 40.0 wt% or less, and particularly preferably in a range of 5.0 wt% or more and 40 wt% or less. When the polymerizable compound is contained in the aqueous composition in an amount of 40 wt% or less, stability of the polymerizable compound in the aqueous composition is increased, and solubility of the polymerizable compound can be maintained.

As the resin component, for example, a commercially available product can be used. The resin component may contain, for example, styrene and vinyl chloride as a monomer. The resin component may be in a state of being dissolved in the aqueous composition or the aqueous composition may be in an emulsion state where the resin component is dispersed as resin particles. These resin components may be used alone or in combination of two or more kinds thereof. Examples of the resin component include an acrylic resin, a maleic acid-based ester resin, a vinyl acetate-based resin, a carbonate-based resin, a polycarbonate-based resin, a styrene-based resin, an ethylene-based resin, a polyethylene-based resin, a propylene-based resin, a polypropylene-based resin, a urethane-based resin, a polyurethane-based resin, a polyester-based resin, and a copolymer resin thereof.

As the resin component, a resin having a glass transition temperature (Tg) in a range of, for example, -30°C or higher and 200°C or lower is used. The glass transition temperature (Tg) is more preferably -30°C or higher and 180°C or lower, and still more preferably -30°C or higher and 150°C or lower.

As the emulsion, for example, a commercially available product may be used. Examples of the commercially available product include "SUPERFLEX (registered trademark) 870" (Tg: 71°C) and "SUPERFLEX (registered trademark) 150" (Tg: 40°C) manufactured by DKS Co., Ltd., "Mowinyl (registered trademark) 6760" (Tg: 0°C), "Mowinyl (registered trademark) 6960" (Tg: - 28°C), "Mowinyl (registered trademark) 6901" (Tg: -16°C), "Mowinyl (registered trademark) 6800" (Tg: 80°C), and "Mowinyl (registered trademark) DM774" (Tg: 33°C) manufactured by Japan Coating Resin co., ltd., "SUPERFLEX 460" (Tg: -21°C) manufactured by DKS Co., Ltd., "POLYZOL (registered trademark) AP-3270N" (Tg: 27°C) manufactured by Showa Denko Materials co., Ltd., and "HILOS-X (registered trademark) KE-1062" (Tg: 112°C) and "HILOS-X (registered trademark) QE-1042" (Tg: 69°C) manufactured by SEIKO PMC CORPORATION.

The resin component has an average particle diameter, for example, in a range of 30 nm or more and 200 nm or less. The average particle diameter can be measured as an arithmetic mean diameter using, for example, a dynamic light scattering particle size distribution analyzer "LB-550" manufactured by Horiba, Ltd.

A content (R) of the resin component in the total amount of ink is, for example, preferably in a range of 0.1 wt% or more and 30 wt% or less, more preferably in a range of 0.5 wt% or more and 20 wt% or less, and particularly preferably in a range of 1.0 wt% or more and 15.0 wt% or less. The resin component may be used alone or in combination of two or more kinds thereof.

The coloring material is, for example, a pigment that can be dispersed in water by using a resin for pigment dispersion (a resin dispersant). Examples of the coloring material include carbon black, an inorganic pigment, and an organic pigment. Examples of the carbon black include furnace black, lamp black, acetylene black, and channel black. Examples of the inorganic pigment include titanium oxide, an iron oxide-based inorganic pigment, and a carbon black-based inorganic pigment. Examples of the organic pigment include: azo pigments such as azo lake, an insoluble azo pigment, a condensed azo pigment, and a chelate azo pigment; polycyclic pigments such as a phthalocyanine pigment, a perylene and perinone pigment, an anthraquinone pigment, a quinacridone pigment, a dioxazine pigment, a thioindigo pigment, an isoindolinone pigment, and a quinophthalone pigment; dye lake pigments such as a basic dye lake pigment and an acid dye lake pigment; nitro pigments; nitroso pigments; and aniline black daylight fluorescent pigments. Note that, the coloring material may be omitted.

A solid content of the coloring material in the total amount of ink is not particularly limited, and can be appropriately determined depending on, for example, a desired optical density or chroma. The solid content of the coloring material is, for example, preferably in a range of 0.1 wt% or more and 20.0 wt% or less, and more preferably in a range of 1.0 wt% or more and 15.0 wt% or less. The solid content of the coloring material is the weight of the pigment alone, and does not include the weight of the resin component. The coloring material may be used alone or in combination of two or more thereof.

The organic solvent is a solvent uniformly mixed with water when mixed in a ratio of 1:1. The organic solvent is not particularly limited, and any solvent can be used. Examples of the organic solvent include propylene glycol, ethylene glycol, 1,2-butanediol, propylene glycol propyl ether, dipropylene glycol propyl ether, diethylene glycol monobutyl ether, and 1,6-hexanediol. Propylene glycol or 1,2-butanediol is preferred. Examples of other organic solvents include: alkyl alcohols having 1 to 4 carbon atoms, such as methyl alcohol, ethyl alcohol, n-propyl alcohol, isopropyl alcohol, n-butyl alcohol, sec-butyl alcohol, and tert-butyl alcohol; alkylene glycols containing an alkylene group having 2 to 6 carbon atoms, such as ethylene glycol, propylene glycol, butylene glycol, triethylene glycol, 1,2,6-hexanetriol, thiodiglycol, hexylene glycol, and diethylene glycol; lower alkyl ethers of alkylene glycols such as glycerin, ethylene glycol monomethyl (or ethyl, propyl, butyl) ether, diethylene glycol monomethyl (or ethyl, propyl, butyl) ether, triethylene glycol monomethyl (or ethyl, propyl, butyl, hexyl) ether, tetraethylene glycol monomethyl (or ethyl, propyl, butyl, hexyl) ether, propylene glycol monomethyl (or ethyl, propyl, butyl) ether, dipropylene glycol monomethyl (or ethyl, propyl, butyl) ether, tripropylene glycol monomethyl (or ethyl, propyl, butyl) ether, and tetrapropylene glycol monomethyl (or ethyl) ether; N-methyl-2-pyrrolidone; 2-pyrrolidone; and 1,3-dimethyl-2-imidazolidinone.

A content of the organic solvent in the total amount of ink is, for example, preferably in a range of 1 wt% or more and 70 wt% or less, and more preferably in a range of 3 wt% or more and 50 wt% or less.

The water is preferably ion exchange water or pure water. A content of the water in the total amount of ink is, for example, preferably in a range of 15 wt% or more and 95 wt% or less, and more preferably in a range of 25 wt% or more and 85 wt% or less. The content of the water may be, for example, the balance except for other components.

The aqueous composition may further contain an additive known in the related art as necessary. Examples of the additive include a surfactant, a pH adjuster, a viscosity adjuster, a surface tension adjuster, a preservative, an antifungal agent, a leveling agent, an antifoaming agent, a light stabilizer, an antioxidant, a nozzle drying inhibitor, a polymer component such as an emulsion, and a dye. The surfactant may include a nonionic surfactant. As the nonionic surfactant, for example, a commercially available product may be used. Examples of the commercially available product include "OLFINE (registered trademark) E1010", "OLFINE (registered trademark) E1006", and "OLFINE (registered trademark) E1004", which are manufactured by Nissin Chemical co., ltd. A blending amount of the nonionic surfactant in the total amount of aqueous ink is, for example, 5 wt% or less, 3 wt% or less, or 0.1 wt% to 2 wt%. Examples of the viscosity adjuster include polyvinyl alcohol, cellulose, and a water-soluble resin.

The aqueous composition can be prepared by uniformly mixing, for example, the ultraviolet curing agent, the resin component, the coloring material, the organic solvent, the water, and other additives if necessary by using a method known in the related art, and removing insoluble matters using a filter or the like.

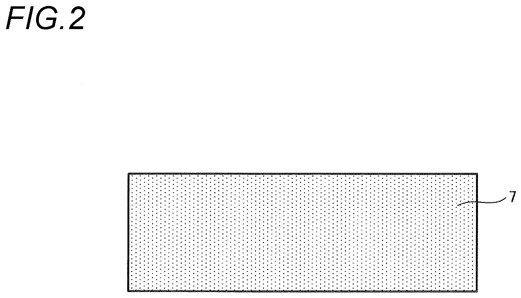

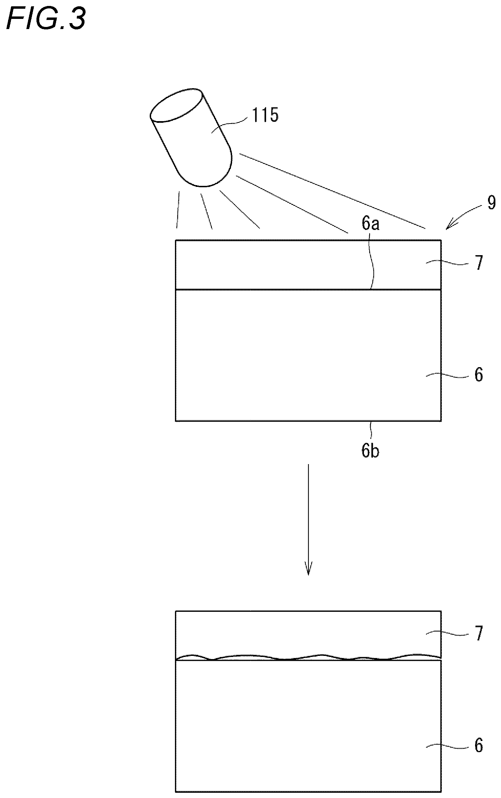

Next, a layer formation method for producing a printed matter 9 (see FIG. 3) using the image recording apparatus 10 and the above aqueous composition will be described. In the layer formation method, an application step and a drying step are carried out in this order. Hereinafter, reference is made to FIG. 1 and FIG. 2.

In the application step, the aqueous composition is ejected onto the sheet 6. Specifically, in the application step, a printing step of ejecting the aqueous composition as droplets from the printing head 34 toward an upper surface 6a of the sheet 6 whose tension has been adjusted by the tension controller 28 is executed. Accordingly, an aqueous composition layer is formed on the upper surface 6a of the sheet 6. Note that, in the application step, the aqueous composition may be applied to the sheet 6. After the application step, a printing step of ejecting a printing ink onto the aqueous composition layer may be further executed. In this case, the printing ink is ejected from the printing head 33 onto the aqueous composition layer, and the aqueous ink serves as a base for the printing using the printing ink. The printing ink is not particularly limited as long as an image can be formed on the aqueous composition layer.

After the application step, the drying step is executed. In the drying step, the aqueous composition ejected onto the sheet 6 is dried. Specifically, in the drying step, both the sheet 6 and the aqueous composition passing below openings in the heater 35 are dried by radiant heat from the heater 35. A drying temperature is in a range of 40°C to 230°C. The drying temperature is more preferably in a range of 50°C to 220°C. The drying temperature is particularly preferably in a range of 50°C to 150°C. When the drying step is executed, the resin component in the aqueous composition softens, and then the sheet 6 and the resin component are cooled, to thereby solidify the resin component. As a result, as shown in FIG. 2, a coating layer 7 (an example of a coating layer, a layer, or a printing layer), including a transparent clear layer made of the resin component and a coloring material layer that forms an image using the coloring material, is fixed on the upper surface 6a of the sheet 6. The coating layer 7 contains the ultraviolet curing agent. Note that, the drying step may be omitted. In FIG. 2, the sheet 6 is omitted for simplification of illustration.

Note that, in the case where the printing step is further executed after the application step, the drying step may be executed after the printing step, may be executed between the application step and the printing step, or may both be executed between the application step and the printing step and after the printing step. For example, in the case where the printing ink does not require a drying step, the drying step may be executed after the aqueous composition is applied or ejected, and then the printing step may be executed. On the other hand, in the case where the printing ink requires a drying step, the drying step may be executed after the execution of the printing step after the aqueous composition is applied or ejected, or the drying step may be executed after the aqueous composition is applied or ejected, then the printing step may be executed, and the drying step may be executed again.

Next, a substrate regeneration method for peeling off the coating layer 7 from the produced printed matter 9 (see FIG. 3) will be described. The substrate regeneration method is carried out when recycling the sheet 6 after the printed matter 9 is produced by using the above method. In the substrate regeneration method, an irradiation step is carried out.

In the irradiation step, the upper surface 6a of the sheet 6 on which the coating layer 7 is formed is irradiated with ultraviolet light. Note that, a lower surface 6b of the sheet 6 opposite to the upper surface 6a may be irradiated with ultraviolet light. Accordingly, the coating layer 7 can be cured by using the ultraviolet curing agent present in the coating layer 7 while preventing the deterioration of the upper surface 6a of the sheet 6 on which the coating layer 7 is formed.

The ultraviolet light for irradiation onto the upper surface 6a of the sheet 6 has a peak wavelength in a range of 350 nm to 400 nm. As shown in FIG. 3, when the coating layer 7 is irradiated with ultraviolet light from a light source 115 in an ultraviolet irradiation device, the polymerizable compound undergoes a polymerization reaction due to the photopolymerization initiator in the ultraviolet curing agent contained in the coating layer 7. As a result, the coating layer 7 is cured, and thereby an adhesion force between the coating layer 7 and the sheet 6 decreases, and the coating layer 7 is easily peeled off from the sheet 6.

Examples of the ultraviolet irradiation device include one including a light source such as a metal halide lamp, a high pressure mercury lamp, an extra-high pressure mercury lamp, a deep ultraviolet lamp, an ultraviolet laser, a xenon lamp, and a UV-LED (ultraviolet light emitting diode). The ultraviolet irradiation device is preferably one including a UV-LED light source from the viewpoint of power consumption.

### Operation and Effect of Embodiment

In the aqueous composition, the coating layer 7, including a transparent clear layer made of the resin component and the coloring material, is formed by being fixed onto the upper surface 6a of the sheet 6. The coating layer 7 contains the ultraviolet curing agent (the photopolymerization initiator and the polymerizable compound). Since the aqueous composition is in an emulsion state where the resin component is dispersed in water, the resin component is likely to be uniformly fixed to the sheet 6. Since the aqueous composition is in a state where the photopolymerization initiator and the polymerizable compound are dissolved in water at 1 wt% or more, the risks to people and the environment are small. In addition, since the photopolymerization initiator has an absorption wavelength peak in the range of 350 nm or more and 400 nm or less, through irradiation with ultraviolet light having a wavelength as close as possible to that of visible light, the polymerizable compound can undergo a polymerization reaction. Since the polymerizable compound has a plurality of polymerizable reactive functional groups, the polymerization reaction can be easily caused even with ultraviolet light having a wavelength as close as possible to that of visible light. As a result, the coating layer 7 is cured and the adhesion force of the coating layer 7 to the sheet 6 decreases, making it possible to peel off the coating layer 7 from the sheet 6. Therefore, the operator can peel off the coating layer 7 from the sheet 6 and reuse the sheet 6. As described above, it is possible to provide an aqueous composition that has small risks to people and the environment while achieving both fixability to the sheet 6 and film removability during recycling.

In the aqueous composition, since the photopolymerization initiator is an acylphosphine oxide-based photopolymerization initiator, the polymerization reaction of the polymerizable compound can be more reliably caused.

In the aqueous composition, since the polymerizable compound having a plurality of polymerizable reactive functional groups is contained in the aqueous composition in an amount of 1 wt% or more, the polymerization reaction of the polymerizable compound is accelerated. Therefore, the coating layer 7 has improved peelability from the sheet 6. Since the polymerizable compound is contained in the aqueous composition in an amount of 40 wt% or less, the stability of the polymerizable compound in the aqueous composition is increased, and the solubility of the polymerizable compound can be maintained.

In the aqueous composition, since the polymerizable compound having a plurality of polymerizable reactive functional groups is contained in the aqueous composition in an amount of 1 wt% or more, the polymerization reaction of the polymerizable compound is accelerated. Therefore, the coating layer 7 has improved peelability from the sheet 6. Since the polymerizable compound is contained in the aqueous composition in an amount of 40 wt% or less, the stability of the polymerizable compound in the aqueous composition is increased, and the solubility of the polymerizable compound is maintained.

In the aqueous composition, the photopolymerization initiator and the polymerizable compound are used to enable the resin component fixed to the sheet 6 by drying to be peeled off through irradiation with ultraviolet light. Therefore, the operator can improve the adhesion force of the resin component to the sheet 6 by drying, and at the same time, can peel off the resin component from the sheet 6 through irradiation with ultraviolet light and reuse the sheet 6.

In the aqueous composition, since the sheet 6 is a non-permeable substrate, the resin component fixed to the sheet 6 can be prevented from permeating the sheet 6. Therefore, in the recycling process for the printed matter 9 having the coating layer 7 with the resin component fixed to the sheet 6, the coating layer 7 can be easily removed from the sheet 6 by irradiating the printed matter 9 with ultraviolet light.

Since the aqueous composition contains a coloring material, a color can be added to the sheet 6.

In the printed matter 9, the coating layer 7, including the transparent clear layer made of the resin component and the coloring material layer that forms an image using the coloring material, is formed by being fixed onto the upper surface 6a of the sheet 6. The coating layer 7 contains the ultraviolet curing agent (the photopolymerization initiator and the polymerizable compound). Since the printed matter 9 is formed using an aqueous composition in an emulsion state where the resin component is dispersed in water, the resin component is uniformly fixed to the sheet 6. Since the printed matter 9 is formed by using an aqueous composition in a state where the photopolymerization initiator and the polymerizable compound are dissolved in water at 1 wt% or more, the risks to people and the environment are small. Since the photopolymerization initiator contained in the coating layer 7 has an absorption wavelength peak in the range of 350 nm or more and 400 nm or less, through irradiation with ultraviolet light having a wavelength as close as possible to that of visible light, the polymerizable compound can undergo a polymerization reaction. Since the polymerizable compound has a plurality of polymerizable reactive functional groups, the polymerization reaction can be easily caused even with ultraviolet light having a wavelength as close as possible to that of visible light. As a result, the coating layer 7 is cured and the adhesion force of the coating layer 7 to the sheet 6 decreases, making it possible to peel off the coating layer 7 from the sheet 6. Therefore, the operator can remove the coating layer 7 from the sheet 6 by peeling off the coating layer 7 from the sheet 6, and can therefore reuse the sheet 6. As described above, it is possible to provide a printed matter 9 that has small risks to people and the environment while achieving both fixability to the sheet 6 and film removability during recycling.

### Modifications

In the aqueous composition, an acylphosphine oxide-based photopolymerization initiator is used as the photopolymerization initiator. However, the photopolymerization initiator is not limited to the acylphosphine oxide-based photopolymerization initiator as long as it can cause a polymerization reaction of the polymerizable compound. For example, IRGACURE 2959 (manufactured by Tokyo Chemical Industry Co., Ltd., absorption wavelength peak: 274 nm, 330 nm) may be used as the photopolymerization initiator. In this case, ultraviolet light for irradiation onto the upper surface 6a of the sheet 6 preferably has a peak wavelength in a range of 250 nm to 350 nm.

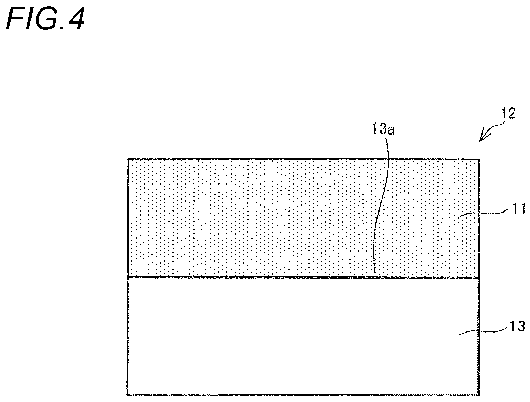

The aqueous composition contains a coloring material, but the coloring material may be omitted. In this case, a transparent clear layer 13 (an example of the layer or the coating layer) free of a coloring material is formed on the upper surface 6a of the sheet 6 by the application step. After the application step, a printing step of ejecting a printing ink onto the clear layer 13 is executed. The aqueous composition plays a role of a base for the printing using the printing ink. When the printing step is executed, as shown in FIG. 4, a coloring material layer 11 (an example of the layer and the printing layer) that forms a print image by the coloring material contained in the printing ink is formed on an upper surface 13a of the clear layer 13. Accordingly, a printed matter 12 (an example of a laminate) is formed by laminating the sheet 6, the clear layer 13, and the coloring material layer 11 in this order. Note that, in FIG. 4, the sheet 6 is omitted for simplification of illustration.

### EXAMPLES

Hereinafter, Examples of the present invention will be described.

### (Example 1)

The aqueous composition used was one containing 1.0 wt% of lithium phenyl-2,4,6-trimethylbenzoylphosphinate (absorption wavelength peak: 380 nm) as a photopolymerization initiator, 5.0 wt% of N,N'-1,2-ethanediylbis{N-[2-(acryloylamino)ethyl]acrylamide} as a polymerizable compound, 5.0 wt% of Mowinyl 6760 as a resin component, 10.0 wt% of propylene glycol as an organic solvent, and ion exchange water as a solvent, being the balance. The drying temperature in the drying step was set to 90°C. The sheet (substrate) used was a PET film.

### (Example 2)

It is different from Example 1 in that, instead of Mowinyl 6760, 5.0 wt% of Mowinyl 6960 is contained as the resin component. Other conditions are the same as those in Example 1.

### (Example 3)

It is different from Example 1 in that, instead of Mowinyl 6760, 5.0 wt% of Mowinyl 6901 is contained as the resin component. Other conditions are the same as those in Example 1.

### (Example 4)

It is different from Example 1 in that, instead of Mowinyl 6760, 5.0 wt% of SUPERFLEX 460 is contained as the resin component. Other conditions are the same as those in Example 1.

### (Example 5)

It is different from Example 1 in that, instead of Mowinyl 6760, 5.0 wt% of Mowinyl 6800 is contained as the resin component. Other conditions are the same as those in Example 1.

### (Example 6)

It is different from Example 1 in that a black ink (LC3139 manufactured by Brother Industries, Ltd.) is used. In Example 6, after the application step of applying the aqueous composition onto a sheet, a printing step of applying a black ink as a printing ink onto an aqueous composition layer was executed. Note that, the aqueous composition used was the same as that in Example 1.

### (Example 7)

It is different from Example 6 in that, instead of Mowinyl 6760, 5.0 wt% of Mowinyl 6960 is contained as the resin component. Other conditions are the same as those in Example 6.

### (Example 8)

It is different from Example 1 in that, instead of N,N'-1,2-ethanediylbis{N-[2-(acryloylamino)ethyl]acrylamide}, 5.0 wt% of N,N'-(((2-acrylamido-2((3-(buta-1,3-diene-2-ylamino)propoxy-1,3-diyl)bis(oxy))bis(propane-3,1-diyl))diacrylamide is contained as the polymerizable compound. Other conditions are the same as those in Example 1.

### (Example 9)

It is different from Example 1 in that, instead of N,N'-1,2-ethanediylbis{N-[2-(acryloylamino)ethyl]acrylamide}, 5.0 wt% of N,N-bis(2-acrylamidoethyl)acrylamide is contained as the polymerizable compound. Other conditions are the same as those in Example 1.

### (Example 10)

It is different from Example 1 in that, instead of N,N'-1,2-ethanediylbis{N-[2-(acryloylamino)ethyl]acrylamide}, 5.0 wt% of N,N'-(((oxybis(ethane-2,1-diyl))bis(oxy))bis(propane-3,1-diyl))diacrylamide is contained as the polymerizable compound. Other conditions are the same as those in Example 1.

### (Example 11)

It is different from Example 1 in that N,N'-1,2-ethanediylbis{N-[2-(acryloylamino)ethyl]acrylamide} contained as the polymerizable compound is 1.0 wt% and ion exchange water is contained as the solvent being the balance. Other conditions are the same as those in Example 1.

### (Example 12)

It is different from Example 11 in that N,N'-1,2-ethanediylbis{N-[2-(acryloylamino)ethyl]acrylamide} contained as the polymerizable compound is 2.5 wt% and ion exchange water is contained as the solvent being the balance. Other conditions are the same as those in Example 11.

### (Example 13)

It is different from Example 11 in that N,N'-1,2-ethanediylbis{N-[2-(acryloylamino)ethyl]acrylamide} contained as the polymerizable compound is 10.0 wt% and ion exchange water is contained as the solvent being the balance. Other conditions are the same as those in Example 11.

### (Example 14)

It is different from Example 11 in that N,N'-1,2-ethanediylbis{N-[2-(acryloylamino)ethyl]acrylamide} contained as the polymerizable compound is 40.0 wt% and ion exchange water is contained as the solvent being the balance. Other conditions are the same as those in Example 11.

### (Example 15)

It is different from Example 11 in that the aqueous composition further contains 5.0 wt% of a carbon black pigment dispersion liquid as a coloring material and that the aqueous composition further contains 0.5 wt% of OLFINE E1010 as a surfactant. The balance is ion exchange water. Other conditions are the same as those in Example 11.

### (Example 16)

It is different from Example 15 in that N,N'-1,2-ethanediylbis{N-[2-(acryloylamino)ethyl]acrylamide} contained as the polymerizable compound is 5.0 wt% and no surfactant is contained. The balance is ion exchange water. Other conditions are the same as those in Example 15.

### (Example 17)

It is different from Example 15 in that N,N'-1,2-ethanediylbis{N-[2-(acryloylamino)ethyl]acrylamide} contained as the polymerizable compound is 5.0 wt%. The balance is ion exchange water. Other conditions are the same as those in Example 15.

### (Comparative Example 1)

It is different from Example 1 in that no resin component is contained and 5.0 wt% of propylene glycol is contained as an organic solvent. The balance is ion exchange water. Other conditions are the same as those in Example 1.

### (Comparative Example 2)

It is different from Example 1 in that no photopolymerization initiator or polymerizable compound is contained. The balance is ion exchange water. Other conditions are the same as those in Example 1.

### (Comparative Example 3)

It is different from Example 17 in that plain paper for printing (Multi-paper Super White+ manufactured by ASKUL Corporation) is used as the sheet. Other conditions are the same as those in Example 17.

### Printing Method

Hereinafter, the coating layer 7 formed on the sheet 6 using the aqueous composition was tested for fixability and peelability.

### Fixability Test

In the application step, the aqueous composition was dropped onto the upper surface 6a of the sheet using a dropper in an amount of 50 mg/cm², and in the drying step, the aqueous composition on the upper surface of the sheet was dried at 90°C for 3 hours, to form the coating layer 7 made of the aqueous composition on the upper surface of the sheet. A fixability test was carried out, in which an adhesive tape was attached to the surface of the coating layer 7 on the sheet and the adhesive tape was peeled off from the coating layer 7. In Examples 1 to 17 and Comparative Examples 1 and 2, the sheet used was a PET film. In Comparative Example 3, the sheet used was plain paper for printing (Multi-paper Super White+ manufactured by ASKUL Corporation). The adhesive tape used was a cellophane tape [Cellulose Tape (registered trademark) CT-12 (manufactured by NICHIBAN Co., Ltd)]. The fixability of the coating layer to the sheet was evaluated according to the following evaluation criteria.
A: did not peel off
B: peeled off

### Peelability Test

In the irradiation step, the sheet was irradiated with ultraviolet light for 10 seconds from an ultraviolet irradiation device at a distance of 100 mm. The ultraviolet irradiation device used was a UV-LED light [printing UV-LED series E075Z HC (manufactured by Ushio Inc.), 395 nm]. Thereafter, a peel test was carried out under the following two conditions.

Condition 1: An adhesive tape was attached to the surface of the sheet and the coating layer after the irradiation with ultraviolet light, and the adhesive tape was peeled off from the coating layer.

Condition 2: The sheet and the coating layer after the irradiation with ultraviolet light were folded in half and then returned to the original state, then an adhesive tape was attached to the surface of the sheet and the coating layer, and the adhesive tape was peeled off from the coating layer.

Note that, when the sheet and the coating layer were folded in half under the condition 2, cracks are generated in the coating layer, and thus the peelability can be improved. The adhesive tape used was a cellophane tape [Cellulose Tape (registered trademark) CT-12 (manufactured by NICHIBAN Co., Ltd)]. The peelability of the coating layer to the sheet was evaluated according to the following evaluation criteria.
A: peeled off under both the condition 1 and the condition 2
B: did not peel off under the condition 1, but peeled off under the condition 2
C: did not peel off under either the condition 1 or the condition 2

**Table 1**

| | | Example 1 | Example 2 | Example 3 | Example 4 | Example 5 | Example 6 | Example 7 |
|---|---|---|---|---|---|---|---|---|
| Photopolymerization initiator (wt%) | Photopolymerization initiator 1 | 1 | 1 | 1 | 1 | 1 | 1 | 1 |
| Polymerizable compound (wt%) | Polymerizable compound 1 | | | | | | | |
| | Polymerizable compound 2 | | | | | | | |
| | Polymerizable compound 3 | | | | | | | |
| | Polymerizable compound 4 | 5 | 5 | 5 | 5 | 5 | 5 | 5 |
| Resin component (wt%) | Mowinyl 6760 | 5 | | | | | 5 | |
| | Mowinyl 6960 | | 5 | | | | | 5 |
| | Mowinyl 6901 | | | 5 | | | | |
| | SUPERFLEX 460 | | | | 5 | | | |
| | Mowinyl 6800 | | | | | 5 | | |
| Coloring material (wt%) | Pigment dispersion liquid | | | | | | | |
| Organic solvent (wt%) | Propylene glycol | 10 | 10 | 10 | 10 | 10 | 10 | 10 |
| Surfactant (wt%) | OLFINE E1010 | | | | | | | |
| Solvent (wt%) | Ion exchange water | Balance | Balance | Balance | Balance | Balance | Balance | Balance |
| Printing ink | Black ink | | | | | | Drop | Drop |
| Drying temperature (°C) | | 90 | 90 | 90 | 90 | 90 | 90 | 90 |
| Sheet | | PET | PET | PET | PET | PET | PET | PET |
| Evaluation result | Fixability | A | A | A | A | A | A | A |
| | Peelability | A | A | A | A | A | A | A |

| | | Example 8 | Example 9 | Example 10 | Example 11 | Example 12 | Example 13 | Example 14 |
|---|---|---|---|---|---|---|---|---|
| Photopolymerization initiator (wt%) | Photopolymerization initiator 1 | 1 | 1 | 1 | 1 | 1 | 1 | 1 |
| Polymerizable compound (wt%) | Polymerizable compound 1 | 5 | | | | | | |
| | Polymerizable compound 2 | | 5 | | | | | |
| | Polymerizable compound 3 | | | 5 | | | | |
| | Polymerizable compound 4 | | | | 1 | 2.5 | 10 | 40 |
| Resin component (wt%) | Mowinyl 6760 | 5 | 5 | 5 | 5 | 5 | 5 | 5 |
| | Mowinyl 6960 | | | | | | | |
| | Mowinyl 6901 | | | | | | | |
| | SUPERFLEX 460 | | | | | | | |
| | Mowinyl 6800 | | | | | | | |
| Coloring material (wt%) | Pigment dispersion liquid | | | | | | | |
| Organic solvent (wt%) | Propylene glycol | 10 | 10 | 10 | 10 | 10 | 10 | 10 |
| Surfactant (wt%) | OLFINE E1010 | | | | | | | |
| Solvent (wt%) | Ion exchange water | Balance | Balance | Balance | Balance | Balance | Balance | Balance |
| Printing ink | Black ink | | | | | | | |
| Drying temperature (°C) | | 90 | 90 | 90 | 90 | 90 | 90 | 90 |
| Sheet | | PET | PET | PET | PET | PET | PET | PET |
| Evaluation result | Fixability | A | A | A | A | A | A | A |
| | Peelability | A | A | A | B | A | A | A |

| | | Example 15 | Example 16 | Example 17 | Comparative Example 1 | Comparative Example 2 | Comparative Example 3 |
|---|---|---|---|---|---|---|---|
| Photopolymerization initiator (wt%) | Photopolymerization initiator 1 | 1 | 1 | 1 | 1 | | 1 |
| Polymerizable compound (wt%) | Polymerizable compound 1 | | | | | | |
| | Polymerizable compound 2 | | | | | | |
| | Polymerizable compound 3 | | | | | | |
| | Polymerizable compound 4 | 1 | 5 | 5 | 5 | | 5 |
| Resin component (wt%) | Mowinyl 6760 | 5 | 5 | 5 | | 5 | 5 |
| | Mowinyl 6960 | | | | | | |
| | Mowinyl 6901 | | | | | | |
| | SUPERFLEX 460 | | | | | | |
| | Mowinyl 6800 | | | | | | |
| Coloring material (wt%) | Pigment dispersion liquid | 5 | 5 | 5 | | | 5 |
| Organic solvent (wt%) | Propylene glycol | 10 | 10 | 10 | 10 | 10 | 10 |
| Surfactant (wt%) | OLFINE E1010 | 0.5 | | 0.5 | | | 0.5 |
| Solvent (wt%) | Ion exchange water | Balance | Balance | Balance | Balance | Balance | Balance |
| Printing ink | Black ink | | | | | | |
| Drying temperature (°C) | | 90 | 90 | 90 | 90 | 90 | 90 |
| Sheet | | PET | PET | PET | PET | PET | Plain paper |
| Evaluation result | Fixability | A | A | A | B | A | A |
| | Peelability | B | A | A | NG | C | C |

Photopolymerization initiator 1: lithium phenyl-2,4,6-trimethylbenzoylphosphinate Polymerizable compound 1: N,N'-(((2-acrylamido-2((3-(buta-1,3-diene-2-ylamino)propoxy-1,3-diyl)bis(oxy))bis(propane-3,1-diyl))diacrylamide Polymerizable compound 2: N,N-bis(2-acrylamidoethyl)acrylamide Polymerizable compound 3: N,N'-(((oxybis(ethane-2,1-diyl))bis(oxy))bis(propane-3,1-diyl))diacrylamide Polymerizable compound 4: N,N'-1,2-ethanediylbis{N-[2-(acryloylamino)ethyl]acrylamide}

### Fixability Test Evaluation

As shown in Table 1, in all of Examples 1 to 17 and Comparative Examples 2 and 3, the coating layer was not peeled off from the upper surface of the sheet, and therefore the evaluation was A. This is thought to be because the aqueous composition dropped onto the sheet in the application step was dried at 90°C in the drying step, and as a result, the film formation of the resin component in the aqueous composition has proceeded further, and the adhesion between the upper surface of the sheet and the coating layer has improved. Note that, in Comparative Example 1, peeling occurred and therefore the evaluation was B. This is thought to be because no resin component was contained, and no coating layer was formed on the upper surface of the sheet.

### Peelability Test Evaluation

As shown in Table 1, in all of Examples 1 to 10, 12 to 14, 16, and 17, peeling occurred under both the condition 1 and the condition 2, and therefore the evaluation was A. This is thought to be because the absorption wavelength peak of the photopolymerization initiator was 380 nm, so that the photopolymerization initiator was sufficiently activated, and the polymerization reaction of the polymerizable compound was accelerated. This is also thought to be because the polymerizable compound was 2.5 wt% or more, so that the film was sufficiently cured due to the polymerization reaction of the polymerizable compound, and the adhesion between the coating layer and the sheet sufficiently decreased.

In both Examples 11 and 15, no peeling occurred under the condition 1 but occurred under the condition 2, and therefore the evaluation was B. This is also thought to be because the polymerizable compound was less than 1 wt%, so that the film was not sufficiently cured due to the polymerization reaction of the polymerizable compound, and the adhesion between the coating layer and the sheet did not decrease.

In Comparative Example 1, since no resin component was contained and no coating layer was formed on the upper surface of the sheet, the evaluation for the peelability was NG.

In Comparative Example 2, no peeling occurred under either the condition 1 or the condition 2, and therefore the evaluation was C. This is thought to be because the aqueous composition was free of a photopolymerization initiator or a polymerizable compound in the ultraviolet curing agent, so that the film was not cured at all, and the adhesion between the coating layer and the sheet did not decrease at all.

In Comparative Example 3, no peeling occurred under either the condition 1 or the condition 2, and therefore the evaluation was C. This is thought to be because the sheet was a plain paper for printing as a permeable substrate, so that the aqueous composition permeated the sheet.

As seen from the above, when the aqueous composition contains a resin component, the evaluation for the fixability is A or more. On the other hand, it is also seen that in the case where the absorption wavelength peak of the photopolymerization initiator is in the vicinity of 380 nm and the polymerizable compound is 1 wt% or more, the evaluation for the peelability is B or more. It is further seen that in the case where the polymerizable compound is 2.5 wt% or more, the evaluation for the peelability is A or more.

### Reference Signs List

6: sheet (example of non-permeable substrate)
7: coating layer (example of coating layer, layer, and printing layer)
9: printed matter (example of laminate)
11: coloring material layer (example of layer and printing layer)
12: printed matter (example of laminate)
13: clear layer (example of coating layer and layer)
13a: upper surface (example of surface)

## Claims

1. An aqueous composition comprising:
at least a photopolymerization initiator, a polymerizable compound, a resin component, and water, wherein
the photopolymerization initiator has a solubility of 1 wt% or more in the water and has an absorption wavelength peak in a range of 350 nm or more and 400 nm or less,
the polymerizable compound has a solubility of 1 wt% or more in the water and has a plurality of polymerizable reactive functional groups, and
the aqueous composition is in an emulsion state where the resin component is dispersed in the water.

2. The aqueous composition according to claim 1, wherein the photopolymerization initiator is an acylphosphine oxide-based photopolymerization initiator.

3. An aqueous composition for use in forming a coating layer or a printing layer on a non-permeable substrate for recycling the non-permeable substrate by peeling off the coating layer and/or the printing layer from a laminate including the non-permeable substrate and the coating layer and/or the printing layer in this order, the aqueous composition comprising:
at least a photopolymerization initiator, a polymerizable compound, a resin component, and water, wherein
the photopolymerization initiator has a solubility of 1 wt% or more in the water,
the polymerizable compound has a solubility of 1 wt% or more in the water and has a plurality of polymerizable reactive functional groups, and
the aqueous composition is in an emulsion state where the resin component is dispersed in the water.

4. The aqueous composition according to any one of claims 1 to 3, wherein the polymerizable compound is contained in the aqueous composition in a range of 1.0 wt% or more and 40 wt% or less.

5. The aqueous composition according to any one of claims 1 to 3, wherein the polymerizable compound is contained in the aqueous composition in a range of 2.5 wt% or more and 40 wt% or less.

6. The aqueous composition according to any one of claims 1 to 3, wherein the photopolymerization initiator and the polymerizable compound are used to enable the resin component fixed to the substrate by drying to be peeled off through irradiation with ultraviolet light.

7. The aqueous composition according to claim 6, wherein the substrate is a non-permeable substrate.

8. The aqueous composition according to any one of claims 1 to 3, further comprising: a coloring material.

9. A printed matter comprising:
a non-permeable substrate;
a coating layer in which the resin component in the aqueous composition according to any one of claims 1 to 3 is fixed to the non-permeable substrate; and
a printing layer on which a print image is to be formed and which is formed on a surface of the coating layer opposite to the non-permeable substrate.

10. A printed matter comprising:
a non-permeable substrate; and
a printing layer on which a print image is to be formed and in which the resin component in the aqueous composition according to any one of claims 1 to 3 is fixed to the non-permeable substrate.

11. A layer formation method of forming a peelable layer on a substrate using the aqueous composition according to any one of claims 1 to 3.
